# FASCICULE DE BREVET EUROPEEN

(11) **EP 3 563 566 B1**
(45) Date de publication et mention de la délivrance du brevet: **30.07.2025**
(21) Numéro de dépôt: 17816918.1
(22) Date de dépôt: 23.11.2017
(51) Int. Cl.: H04N 7/18, G08B 13/196

(54) **PROCÉDÉ DE CONTRÔLE DE PRÉSENCE ET SYSTÈME DE SURVEILLANCE**
ANWESENHEITSÜBERWACHUNGSVERFAHREN UND ÜBERWACHUNGSSYSTEM
PRESENCE-MONITORING METHOD AND SURVEILLANCE SYSTEM

(30) Priorité: 27.12.2016 FR 1663404
(43) Date de publication de la demande: 06.11.2019
(73) Titulaire: Somfy Activites SA, 74300 Cluses (FR)
(72) Inventeur: PEIXOTO GUIMARAES UBIRAJARA E SILVA, Gabriel, 30130-160 Belo Horizonte MG (BR)
(74) Mandataire: Germain Maureau
(86) Numéro de dépôt international: PCT/FR2017/053232
(87) Numéro de publication internationale: WO 2018/122479

(56) Documents cités:
- EP-A1- 3 098 792
- WO-A1-2015/130744
- US-A1- 2007 257 985
- US-A1- 2012 092 502

## Description

### Domaine de l'invention

La présente invention concerne un système de surveillance d'un bâtiment ainsi qu'un procédé de contrôle de présence dans une zone de surveillance du bâtiment.

### Art antérieur

Il est connu de disposer d'un système d'alarme permettant de détecter une instruction malveillante dans un bâtiment. La mise en place d'un tel système peut toutefois s'avérer complexe car des capteurs et une centrale de surveillance sont à positionner et configurer.

Un tel système d'alarme peut également se révéler compliqué à gérer au quotidien, car les personnes habilitées à entrer dans le bâtiment sont indifféremment détectées par le système d'alarme et doivent ensuite procéder à une neutralisation du système d'alarme.

Le document US 2012/092502 A1 décrit un système de surveillance qui inclut un détecteur de mouvements qui fournit des informations de détection à une application de surveillance.

Le document WO 2015/130744 A1 décrit un système et procédé combinant des données de détection de mouvement avec des données de détection de présence pour déterminer une intrusion/alerte.

La présente invention, définie par les revendications attenantes, vise à résoudre tout ou partie des inconvénients mentionnés ci-dessus.

### Exposé de l'invention

A cet effet, la présente invention concerne un procédé de contrôle de présence dans une zone de surveillance par un système de surveillance tel que décrit dans la revendication 1.

Cette disposition permet de profiter de l'étendue d'un réseau préalablement existant à savoir le réseau de communication pour la détection de présence ou d'absence d'un terminal dans la zone de surveillance.

Ce réseau de communication interne du bâtiment est donc utilisé par le système pour détecter la présence d'un terminal dans la zone de surveillance. Une intrusion peut donc être détectée par le système de surveillance lorsqu'il n'y a pas de correspondance entre une détection de mouvement et une détection de terminal. Dans ce cas le système de surveillance est apte à déterminer s'il existe un risque d'intrusion dans la zone de surveillance.

Alternativement, la présence d'un terminal dans la zone de surveillance peut être indicative qu'une personne attendue est dans la zone de surveillance. Cela peut permettre de rassurer les utilisateurs sur la présence d'une personne attendue.

Le module d'écoute ou le dispositif de surveillance peuvent selon les variantes de réalisation communiquer l'information de mouvement ou l'information de présence à l'unité de traitement au travers du routeur ou par une autre liaison.

Il est également possible de vérifier si un nouveau terminal peut être détecté dans le réseau de communication après la détection d'un mouvement. Par exemple, si la zone de détection est située à proximité d'une porte d'accès à la zone de surveillance, il est possible de détecter si une personne qui entre est une personne connue.

Selon un aspect de l'invention, l'unité de traitement est agencée pour se connecter au réseau de communication.

Cette disposition permet d'avoir une unité de traitement présente dans la zone de surveillance.

De préférence, l'unité de traitement est comprise dans un dispositif distinct présent dans la zone de surveillance ou est comprise dans un terminal apte à se connecter au réseau de communication.

Ainsi, il n'est pas nécessaire que le routeur soit connecté à un autre réseau de communication externe à la zone de surveillance pour mettre en œuvre le procédé.

Selon un autre aspect de l'invention, l'unité de traitement est comprise dans un serveur externe au réseau de communication et le routeur est apte à se connecter au serveur.

Cette disposition permet d'utiliser un serveur distant, par exemple un serveur existant préalablement à la mise en place de la zone de surveillance, pour l'interprétation de l'information de présence et/ou l'information de mouvement.

L'unité de traitement peut se trouver physiquement dans la zone de surveillance ou se situer au niveau du serveur externe en lien avec le routeur ou se situer au niveau d'un terminal.

Selon un aspect de l'invention, le dispositif de surveillance et/ou le module d'écoute sont agencés pour être connectés au réseau de communication.

Ainsi l'échange entre l'unité de traitement d'une part et le dispositif de surveillance et/ou le module d'écoute d'autre part peut être réalisé directement dans le réseau de communication ou par l'intermédiaire du routeur lorsque l'unité de traitement est comprise dans le serveur.

Selon un autre aspect de l'invention, le module d'écoute est compris dans le routeur.

Cette disposition permet de faciliter la détection effectuée par le module d'écoute dans les paquets de données échangés dans le réseau de communication et reçus par le routeur. En effet, les paquets de données échangés sont directement à disposition du module d'écoute.

Selon un aspect de l'invention, le procédé de contrôle de présence comprend en outre les étapes suivantes réalisées par l'unité de traitement :
- réception de l'information de présence et/ou de l'information de mouvement,
- application d'une fonction d'association à l'information de présence et/ou à l'information de mouvement, l'application de la fonction d'association engendrant une information de correspondance,
- analyse de l'information de correspondance selon au moins un critère de détermination d'irrégularité.

Cette disposition permet de concentrer au niveau de l'unité de traitement les informations relatives aux mouvements détectés et aux terminaux détectés dans la zone de surveillance.

Le procédé permet donc de déterminer si un mouvement est suspect car sans terminal dans la zone de surveillance ou si le nombre de mouvements détectés est important par rapport à au nombre de terminaux détectés, une irrégularité peut être constatée. Selon le type d'irrégularité une alarme peut ainsi être déclenchée ou un utilisateur averti.

Selon un aspect de l'invention, la fonction d'association consiste à établir qu'un mouvement détecté soit correspond soit ne correspond pas à la présence d'un terminal déterminé détecté dans le réseau de communication.

Cette disposition permet de détecter quels mouvements ne sont pas engendrés par un utilisateur possédant un terminal déterminé.

Selon un aspect de l'invention, la fonction d'association consiste également à établir soit une correspondance ou soit une non correspondance entre un profil utilisateur préalablement référencé en lien avec un terminal et un terminal dont la présence est détectée.

Ainsi il est possible de déterminer quel utilisateur est présent dans la zone de surveillance ou si un terminal non préalablement référencé en lien avec un profil utilisateur est détecté.

Selon un aspect de l'invention, un critère de détermination d'irrégularité correspond à un mouvement détecté non lié à un profil utilisateur. Ce mouvement est donc potentiellement une intrusion.

Selon un aspect de l'invention, un autre critère d'irrégularité correspond à une détection d'un terminal d'un utilisateur dont le profil est connu tandis qu'aucun mouvement correspondant n'a été détecté pendant une durée déterminée.

Une alerte peut ainsi être émise si un terminal est détecté dans la zone de surveillance sans que cela ne corresponde avec une détection de mouvement dans la zone de surveillance pendant une durée déterminée. L'utilisateur en question peut avoir fait un malaise et être dans l'impossibilité de quitter la zone de surveillance.

Selon un aspect de l'invention, le procédé de contrôle de présence comprend en outre une étape d'enregistrement de l'information de présence et/ou de l'information de mouvement en mémoire de l'unité de traitement.

Cette disposition permet à l'unité de traitement de constituer un historique des informations de mouvement et des informations de présence en provenance du dispositif de surveillance.

Selon un aspect de l'invention, l'information de mouvement est horodatée par le dispositif de surveillance et/ou l'information de présence est horodatée par le module d'écoute.

Cette disposition facilite l'application de la fonction d'association et l'analyse de l'information de correspondance selon un critère de détermination d'irrégularité.

Selon un aspect de l'invention, lorsque le procédé de contrôle de présence tel que décrit ci-dessus est exécuté à plusieurs reprises, les étapes d'application de la fonction d'association et d'analyse de l'information de correspondance prennent en outre en compte la ou les informations de présence et/ou informations de mouvement préalablement enregistrées en mémoire de l'unité de traitement, en particulier lorsque ces informations de présence et/ou informations de mouvement sont déterminées dans une même fenêtre de temps.

Selon un aspect de l'invention, l'étape de détection d'au moins un mouvement d'au moins une entité est suivie par l'étape de détection de l'absence et/ou de la présence d'au moins un terminal dans le réseau de communication.

Cette disposition permet de vérifier si un nouveau terminal peut être détecté dans le réseau de communication après la détection d'un mouvement. Par exemple, si la zone de détection est située à proximité d'une porte d'accès à la zone de surveillance, il est possible de détecter si une personne qui entre est une personne connue.

Selon un aspect ne faisant pas partie de l'invention, l'étape de détection de l'absence et/ou de la présence d'au moins un terminal dans le réseau de communication est réalisée de manière répétée selon une fréquence déterminée.

Cette disposition permet d'une part de faire remonter régulièrement à l'unité de traitement une information de présence et d'autre part de réduire la consommation énergétique du dispositif de surveillance puisque la détection d'une absence et/ou d'une présence d'au moins un terminal n'est pas réalisée de manière ponctuelle.

Selon un aspect de l'invention, l'étape d'envoi de l'information de présence est réalisée suite à l'étape de création et/ou modification en mémoire du dispositif de surveillance d'une information de présence ou sur requête de l'unité de traitement ou selon une base de temps définie.

Cette disposition permet soit de faire remonter à l'unité de traitement l'information de présence le plus rapidement possible soit de manière régulière. Ainsi plusieurs modes de fonctionnements peuvent être distingués.

Un premier mode de fonctionnement dit « alarme désactivée » qui ne fait pas partie de l'invention, est défini par une détection quasi-permanente de mouvement, c'est-à-dire que l'étape de détection de mouvement est réalisée par un détecteur de mouvement actif (des périodes de veille du détecteur de mouvement peuvent alterner avec des périodes dans lesquelles il est actif), et correspondent à une détection périodique d'informations de présence. La transmission à l'unité de traitement électronique est également réalisée selon une base périodique : il s'agit de fournir à l'unité de traitement une information pratique sur les absences et présences dans la zone de surveillance.

Dans ce cas, le système de surveillance travaille de manière économique puisque le dispositif de surveillance ne se connecte au réseau de communication que ponctuellement selon une fréquence déterminée.

Un deuxième mode de fonctionnement dit « alarme activée » est défini par une détection quasi-permanente de mouvement et une détection de présence effectuée suite à la détection d'un mouvement. L'information de mouvement et l'information de présence sont ensuite immédiatement transférées à l'unité de traitement. Il s'agit alors de fournir à l'unité de traitement une information utile sur les absences et présences dans la zone de surveillance, notamment dans un objectif de détections d'intrusions.

Dans ce cas, dès qu'un mouvement est détecté, une vérification de présence des terminaux dans la zone de surveillance est effectuée puis ces informations remontées à l'unité de traitement. Ainsi, l'étape de détection d'absence et/ou de présence d'au moins un terminal dans le réseau de communication peut avoir lieu avec une fréquence plus élevée que dans le mode « alarme désactivée » si de nombreux mouvements sont détectés.

Bien entendu d'autres modes de fonctionnements peuvent être définis comme variantes des deux modes présentés plus haut, selon les contraintes de vitesse de remontée d'informations et la limitation de la consommation énergétique du dispositif de surveillance voulue.

Selon un aspect de l'invention, l'information de présence comprend en outre une indication relative à la sollicitation du terminal. De préférence, l'indication relative à la sollicitation comprend un indicateur d'activité et/ou de déplacement du terminal.

Cette disposition permet de faire remonter à l'unité de traitement tout comportement suspect, par exemple si un portable est inutilisé depuis une longue période. Dans ce cas une irrégularité peut être constatée : l'utilisateur peut avoir fait un malaise et être dans l'impossibilité d'utiliser son terminal.

Selon un aspect de l'invention, le procédé de contrôle de présence comprend en outre une étape d'envoi d'une information de retour par l'unité de traitement à destination d'un terminal récepteur correspondant à un profil utilisateur référencé en tant que récepteur dans la mémoire de l'unité de traitement, l'information de retour comprenant une indication relative à l'information de mouvement et/ou à l'information de présence et/ou à un résultat de l'analyse de l'information de correspondance selon l'au moins critère de détermination d'irrégularité.

Cette disposition permet à tout utilisateur dont le profil est référencé en tant que récepteur de disposer d'information de retour concernant la surveillance du bâtiment.

Cette disposition est utile car l'utilisateur peut être éloigné de l'unité de traitement ou même hors de la zone de surveillance et être au courant des mouvements détectés, des terminaux présents et/ou d'éventuelles irrégularités ou alarmes relatifs à la zone de surveillance.

Selon un aspect de l'invention, l'information de présence correspond à un terminal autre que le terminal récepteur. Cette disposition est particulièrement utile pour un utilisateur référencé en tant que récepteur qui souhaite connaitre la situation des autres utilisateurs. Ces autres utilisateurs seront notamment référencés avec un profil émetteur, c'est-à-dire, dont l'absence ou la présence peut être déterminée et transmise au module d'écoute.

Selon un aspect de l'invention, le procédé de contrôle de présence comprend en outre une étape de réception d'une information de commande et/ou de contrôle par l'unité de traitement en provenance d'un terminal administrateur correspondant à un profil utilisateur étant référencé en tant qu'administrateur dans la mémoire de l'unité de traitement, l'information de commande et/ou de contrôle comprenant :
- une requête relative à l'exécution d'une étape de détection d'une absence de mouvement ou d'au moins un mouvement d'au moins une entité et/ou d'une étape de détection d'une absence et/ou d'une présence d'au moins un terminal dans un réseau de communication, et/ou,
- une requête relative à l'exécution d'une étape l'application de la fonction d'association et/ou à l'exécution d'une étape d'analyse de l'information de correspondance, et/ou,
- une requête relative à l'exécution d'une étape d'envoi par l'unité de traitement d'une information de retour.

Ainsi un utilisateur ayant un profil référencé dans l'unité de traitement en tant qu'administrateur est apte à commander à distance le déroulement des étapes du procédé de contrôle de présence, notamment en définissant les cadences de détection et en recevant plus ou moins souvent des informations de retour si cet utilisateur est en outre référencé comme récepteur.

Cet utilisateur peut ainsi être averti des irrégularités détectées qui peuvent être des alarmes. Il peut ainsi à distance réagir à ces irrégularités en indiquant à l'unité de traitement qu'elles ne sont pas à considérer comme des irrégularités.

On peut ainsi distinguer un terminal comprenant un profil référencé émetteur comme un terminal « surveillé » et un terminal comprenant un profil référencé comme administrateur et/ou récepteur comme un terminal « surveillant ». Un terminal non référencé pourra être considéré comme un indicateur d'intrusion.

Selon un aspect de l'invention, l'information de retour et/ou l'information de commande et/ou de contrôle transite via le routeur.

Cette disposition permet à un utilisateur ayant un terminal présent dans la zone de surveillance de profiter du réseau de communication.

La présente invention concerne également un système de surveillance, agencé pour mettre en œuvre le procédé de contrôle de présence tel que décrit ci-avant, comprenant :
- un dispositif de surveillance apte à échanger des informations selon un protocole de communication du réseau de communication,
   le dispositif de surveillance comprenant un module de communication agencé pour échanger des informations selon le protocole de communication et un détecteur de mouvement pourvu d'un capteur, le détecteur de mouvement étant configuré pour déterminer une information de mouvement relative à la détection d'un mouvement d'une entité dans une zone de détection dudit capteur,
- un module d'écoute agencé pour communiquer avec un routeur et pourvu d'un analyseur de paquets configuré pour extraire d'au moins un paquet de données échangé dans le réseau de communication et reçu du routeur une information de présence relative à ou une absence ou une présence d'au moins un terminal dans le réseau de communication,
- une unité de traitement comprenant un processeur agencé pour recevoir l'information de présence en provenance du module d'écoute et l'information de mouvement en provenance du dispositif de surveillance.

Selon un aspect de l'invention, l'unité de traitement est agencée pour émettre une requête à destination du module d'écoute sur réception d'une information de mouvement, ladite requête correspondant à une demande d'obtention d'une information de présence.

Cette disposition permet de vérifier si un terminal peut être détecté dans le réseau de communication après la détection d'un mouvement. Il est donc possible d'associer la détection d'un mouvement à la présence d'une personne connue si le terminal en question est un terminal connu.

Selon un aspect de l'invention le capteur du détecteur de mouvement comprenant un détecteur infrarouge et/ou une caméra.

Selon un aspect de l'invention, le module d'écoute est agencé pour échanger des informations avec l'unité de traitement. De préférence, le module d'écoute est compris dans une centrale d'alarme qui est agencée pour gérer un système d'alarme du bâtiment.

Cette disposition permet d'utiliser une centrale d'alarme existante pour la détection d'une information de présence.

Selon un aspect de l'invention, le dispositif de surveillance comprend un système de détection apte à détecter une intrusion malveillante dans le bâtiment.

De préférence le système de détection comprend une pluralité de détecteurs de mouvements. En particulier, le système de détection comprend une pluralité d'éléments indépendants, chaque détecteur de mouvement étant compris dans un élément indépendant correspondant et les modules indépendants étant agencés pour échanger des informations avec une entité centrale du système de détection pourvue d'un processeur.

Cette disposition permet de détecter des mouvements dans l'ensemble du bâtiment.

Selon un aspect de l'invention, le système de détection est agencé pour établir un réseau indépendant filaire et/ou sans fil pour l'échange d'informations entre les éléments indépendants et l'entité centrale.

Le système de détection est ainsi un système indépendant du réseau de communication, ce qui permet un fonctionnement indépendant.

Selon un autre aspect de l'invention, le module d'écoute est compris dans le dispositif de surveillance. Cette disposition permet de constituer simplement un système de surveillance dans le cas où il n'y a pas de module d'écoute déjà installé dans le bâtiment. La mise en place d'un système de surveillance est aisée puisqu'il suffit de mettre en place un dispositif de surveillance dans le bâtiment équipé d'un routeur internet.

Selon un aspect de l'invention, l'unité de traitement est agencée pour se connecter au réseau de communication.

Cette disposition permet d'avoir une unité de traitement présente dans la zone de surveillance.

De préférence, l'unité de traitement est comprise dans un dispositif distinct présent dans la zone de surveillance ou est comprise dans un terminal apte à se connecter au réseau de communication.

Ainsi, il n'est pas nécessaire que le routeur soit connecté à un autre réseau de communication externe à la zone de surveillance pour mettre en œuvre le procédé.

Selon un autre aspect de l'invention, l'unité de traitement est comprise dans un serveur externe au réseau de communication et le routeur est apte à se connecter au serveur.

Cette disposition permet d'utiliser un serveur distant, par exemple un serveur existant préalablement à la mise en place de la zone de surveillance, pour l'interprétation de l'information de présence et/ou l'information de mouvement.

Selon un autre aspect de l'invention, le module d'écoute est compris dans le routeur.

Cette disposition permet de faciliter la détection effectuée par le module d'écoute dans les paquets de données échangés dans le réseau de communication et reçus par le routeur. En effet, les paquets de données échangés sont directement à disposition du module d'écoute.

La présente invention concerne en outre un procédé de référencement par un système de surveillance d'un compte familial en mémoire d'une unité de traitement du système de surveillance comprenant les étapes suivantes :
- création et/ou modification d'un compte familial comprenant au moins un profil utilisateur en mémoire de l'unité de traitement,
- affectation à l'au moins un compte utilisateur d'un référencement en tant qu'administrateur et/ou récepteur par l'unité de traitement, un administrateur étant apte à envoyer une information de commande et/ou de contrôle à destination de l'unité de traitement, un récepteur étant apte à recevoir une information de retour en provenance de l'unité de traitement,
- établissement d'un réseau de communication local par un dispositif de surveillance et/ou un module d'écoute du système de surveillance,
- réception via le réseau de communication local par le dispositif de surveillance et/ou le module d'écoute d'une référence d'accès à un réseau de communication du système de surveillance étendu dans une zone de surveillance au dispositif de surveillance et/ou au module d'écoute,
- connexion du dispositif de surveillance et/ou du module d'écoute au réseau de communication étendu en utilisant la référence d'accès.

Cette disposition permet d'une part de déterminer les autorisations des différents utilisateurs et d'autre part de connecter le dispositif de surveillance et/ou le module d'écoute au système de surveillance.

Ainsi le réseau de communication du système de surveillance peut être un réseau préexistant d'un bâtiment. La zone de surveillance correspond alors à la portée du réseau de communication du bâtiment.

Cette disposition permet donc de définir sans équipement supplémentaire de constitution de réseau une zone de surveillance étendue. Le réseau de communication local du dispositif de surveillance et/ou du module d'écoute peut ainsi avoir une faible portée comparativement au réseau de communication de la zone de surveillance.

Selon un aspect de l'invention l'étape de création et/ou modification d'un compte familial et/ou l'étape d'affectation d'un référencement est réalisée par saisie au niveau d'une interface de l'unité de traitement.

Selon un aspect de l'invention, l'interface de l'unité de traitement est une interface déportée. De préférence, l'interface de l'unité de traitement est ménagée dans le terminal, le terminal et l'unité de traitement étant apte à échanger des informations.

Selon un aspect de l'invention, l'étape de réception d'une référence d'accès est précédée par une étape consistant à scanner un motif tel qu'un code-barres avec un terminal comprenant un module de communication apte à se connecter audit réseau de communication local et, le motif correspondant à une identification du dispositif de surveillance et/ou du module d'écoute.

Cette disposition permet une connexion rapide du dispositif de surveillance et/ou du module d'écoute au réseau de communication de la zone de surveillance.

L'identification du dispositif de surveillance et/ou du module d'écoute acquise par le terminal doté d'une caméra permet le transfert de cette identification vers le routeur et/ou l'unité de traitement qui autorise la connexion en envoyant une référence d'accès au dispositif de surveillance et/ou module d'écoute.

Il apparait ainsi que le dispositif de surveillance et/ou le module d'écoute agissent comme un routeur, notamment pour la configuration et la première identification des terminaux.

Ensuite une fois que le dispositif de surveillance et/ou le module d'écoute font partie du réseau de communication, ils sont aptes à communiquer avec l'unité de traitement selon le procédé de contrôle de présence tel que décrit ci-avant.

Selon un aspect de l'invention, le réseau de communication et/ou le réseau de communication local sont des réseaux de type Wifi ou utilisant une autre technologie, telle que la technologie LoRa ou Sigfox.

Selon un aspect de l'invention, le réseau de communication externe est un réseau de type Internet ou 3G ou tout autre type de réseau étendu.

Selon un aspect de l'invention, les étapes du procédé de référencement sont des étapes préalables aux étapes du procédé de contrôle de présence tel que décrit ci-avant.

Les différents aspects définis ci-dessus non incompatibles peuvent être combinés. L'invention est définie par les revendications attenantes.

### Brève description des figures

L'invention sera mieux comprise à l'aide de la description détaillée qui est exposée ci-dessous en regard du dessin annexé dans lequel :
- la figure 1 est une vue schématique d'un bâtiment et d'un système de surveillance ;
- la figure 2 est un schéma représentant un routeur du système de surveillance apte à mettre en communication un réseau de communication externe avec un réseau de communication du système de surveillance ;
- la figure 3 est un schéma représentant les étapes d'un procédé de référencement d'un compte familial pour l'utilisation du système de surveillance ;
- la figure 4 est un schéma similaire à celui de la figure 2 et comprenant en outre un réseau de communication local utilisé pour le procédé de référencement ;
- la figure 5 est un schéma représentant les étapes d'un procédé de contrôle de présence par le système de surveillance.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Système de surveillance

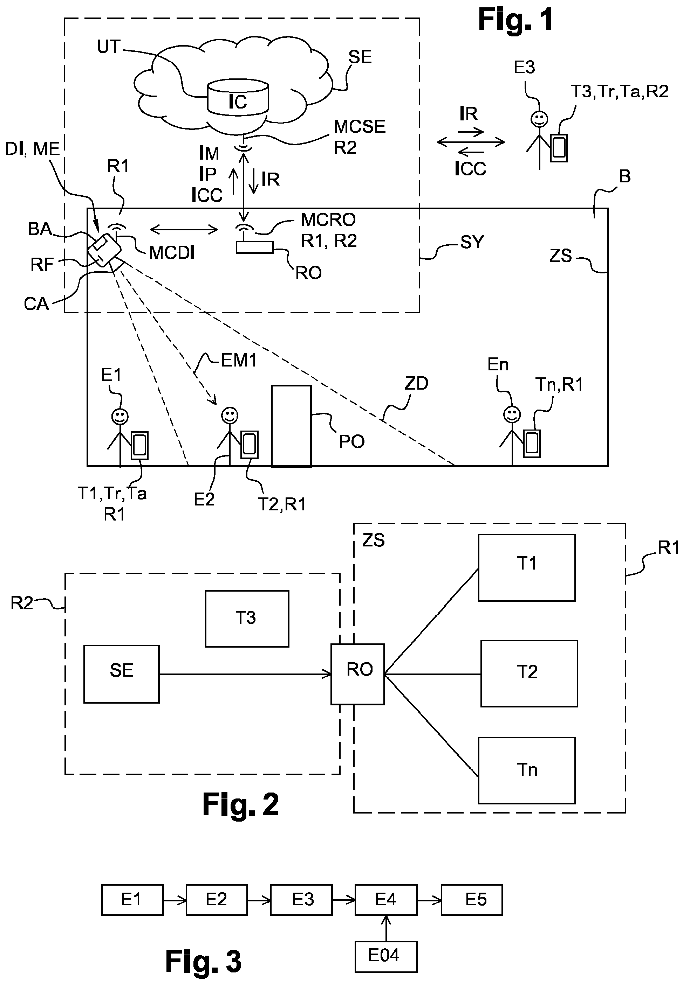

Comme illustré à la figure 1, un système de surveillance SY pour une zone de surveillance ZS d'un bâtiment B comprend un dispositif de surveillance DI.

Le dispositif de surveillance DI comprend un module de communication MCDI lui permettant d'échanger des informations selon un protocole de communication du système de surveillance SY.

Le dispositif de surveillance DI comprend également une batterie BA et un détecteur de mouvement CA configuré pour déterminer une information de mouvement IM.

Le détecteur de mouvement CA comprend un capteur, par exemple pourvu d'un détecteur infrarouge et/ou d'une caméra.

L'information de mouvement IM est relative à une détection d'une absence de mouvement ou d'au moins un mouvement d'au moins une entité E1, E2, En dans une zone de détection ZD de la zone de surveillance SZ.

Le système de surveillance SY comprend en outre un module d'écoute ME pourvu d'un analyseur de paquets configuré pour extraire d'un paquet de données échangé dans un réseau de communication R1 une information de présence IP. L'information de présence IP est relative à une absence ou une présence d'au moins un terminal T1, T2, T3, Tn dans le réseau de communication R1.

Le système de surveillance SY comprend également une unité de traitement UT. Dans le mode de réalisation présenté, l'unité de traitement UT est comprise dans un serveur SE. Elle peut toutefois être comprise physiquement dans la zone de surveillance ZS, associée par exemple avec le dispositif de surveillance DI ou un boîtier de centrale d'alarme. Elle pourrait également se situer au niveau d'un terminal T1, T2, T3, Tn ou tout autre dispositif apte à être connecté au réseau de communication R1.

Le serveur SE est distant et comprend un module de communication MCSE pour permettre une connexion de l'unité de traitement UT à un réseau de communication externe R2, par exemple Internet.

L'unité de traitement UT est pourvue d'un processeur et est agencée pour recevoir des informations de présence IP en provenance du module d'écoute ME et des informations de mouvement IM en provenance du dispositif de surveillance DI.

Comme illustré à la figure 2, le système de surveillance SY comprend un routeur RO apte à transmettre des informations entre le réseau de communication R1 et le réseau de communication externe R2. En particulier, le routeur RO connecte le système de surveillance SY au serveur SE, externe au réseau de communication R1.

Le module d'écoute ME peut être compris dans un boîtier de centrale d'alarme CE qui est agencée pour gérer un système d'alarme du bâtiment B. Dans ce cas, il est possible d'utiliser le module d'écoute ME du système d'alarme préalablement installé dans le bâtiment et de constituer un système de surveillance SY en ajoutant un dispositif de surveillance DI. Alternativement, le module d'écoute ME peut être compris dans routeur RO.

Dans le présent exemple de réalisation, le module d'écoute ME est compris dans le dispositif de surveillance DI. Il apparait ainsi que l'échange d'informations entre le routeur RO et le module d'écoute est réalisé en utilisant le module de communication MCDI.

Chaque entité E1, E2, E3, En correspond à un utilisateur comme symbolisé à la figure 1. Chaque utilisateur possède un terminal T1, T2, T3, Tn agencé pour échanger des informations dans le réseau de communication R1 et dans le réseau de communication externe R2. Chaque terminal T1, T2, T3, Tn comprend un module de communication et une interface homme-machine. Les informations fournies par l'unité de traitement UT peuvent notamment être affichées par cette interface.

Il s'agit par exemple d'un téléphone apte à se connecter à un réseau Wifi correspondant au réseau de communication R1 et à un réseau 3G correspondant au réseau de communication externe R2.

Comme détaillé plus loin, il apparaitra que chaque terminal T1, T2, T3, Tn référencé est un terminal dit « surveillé » par le système de surveillance SY.

Selon une variante, le dispositif de surveillance peut comprendre un système de détection doté d'une pluralité de détecteurs de mouvement CA et d'une pluralité d'éléments indépendants, chaque détecteur de mouvement CA étant ménagé dans un élément indépendant correspondant.

Dans ce cas le système de détection comprend une entité centrale pourvue d'un processeur, le système étant apte à engendrer un réseau indépendant filaire et/ou sans fil pour que l'entité centrale puisse échanger des informations avec chaque détecteur de mouvement CA de la pluralité de détecteurs de mouvements CA.

Il est ainsi possible de surveiller les intrusions dans le bâtiment entier en détectant les mouvements dans chaque pièce.

### Procédé de référencement d'un compte familial

Comme illustré à la figure 3, un procédé de référencement d'un compte familial a pour objet de référencer chaque terminal T1, T2, T3, Tn des membres de la famille.

Le procédé de référencement est réalisé par le système de surveillance SY dans le but qu'un référencement des terminaux T1, T2, T3, Tn de la famille soit réalisé en mémoire de l'unité de traitement UT.

Une première étape E1 consiste en la création et/ou la modification d'un compte familial comprenant au moins un profil utilisateur par l'intermédiaire de l'interface d'un terminal, par exemple le terminal T1. A chaque terminal T1, T2, T3, Tn peut être associé un profil utilisateur.

Les profils utilisateurs associés à chaque terminal T1, T2, T3, Tn sont enregistrés en mémoire au niveau de l'unité de traitement UT et/ou du serveur SE. Les opérations de saisie pour la création et/ou la modification d'un compte familial peuvent être réalisées en utilisant l'interface du terminal T1 qui agit comme une interface déportée de l'unité de traitement UT. Cette étape de création et/ou modification peut par exemple être réalisée grâce à une application logicielle installée sur le terminal T1. Une deuxième étape E2 consiste en l'affectation d'un référencement en tant que terminal administrateur Ta et/ou terminal récepteur Tr d'au moins un terminal T1, T3 correspondant à un profil utilisateur d'un compte familial.

Un administrateur est apte à envoyer une information de commande et/ou de contrôle ICC à destination de l'unité de traitement UT et un récepteur est apte à recevoir une information de retour IR en provenance de l'unité de traitement UT.

Dans l'exemple représenté à la figure 1, les terminaux T1 et T3 ont été définis comme terminaux administrateurs Ta, en d'autres termes il s'agit de terminaux T1, T3 qualifiés de « surveillants ». Le terminal T2 est associé à un profil émetteur

A l'issue de ces étapes E1 et E2, il apparait donc que les terminaux T1, T2, T3, Tn peuvent être qualifiés de « surveillés » et que les terminaux T1 et T3 sont « surveillants ».

Un terminal « surveillant » apte à recevoir une information de retour IR mais non configuré pour émettre une information de commande et/ou de contrôle ICC correspond à un profil récepteur. Ce terminal ne pourrait donc pas modifier des réglages de l'unité de traitement UT au contraire d'un administrateur.

Une troisième étape E3 consiste en l'établissement temporaire d'un réseau de communication local R3 pour la connexion du dispositif de surveillance DI et/ou du module d'écoute ME au réseau de communication R1 et éventuellement la configuration des profils des terminaux.

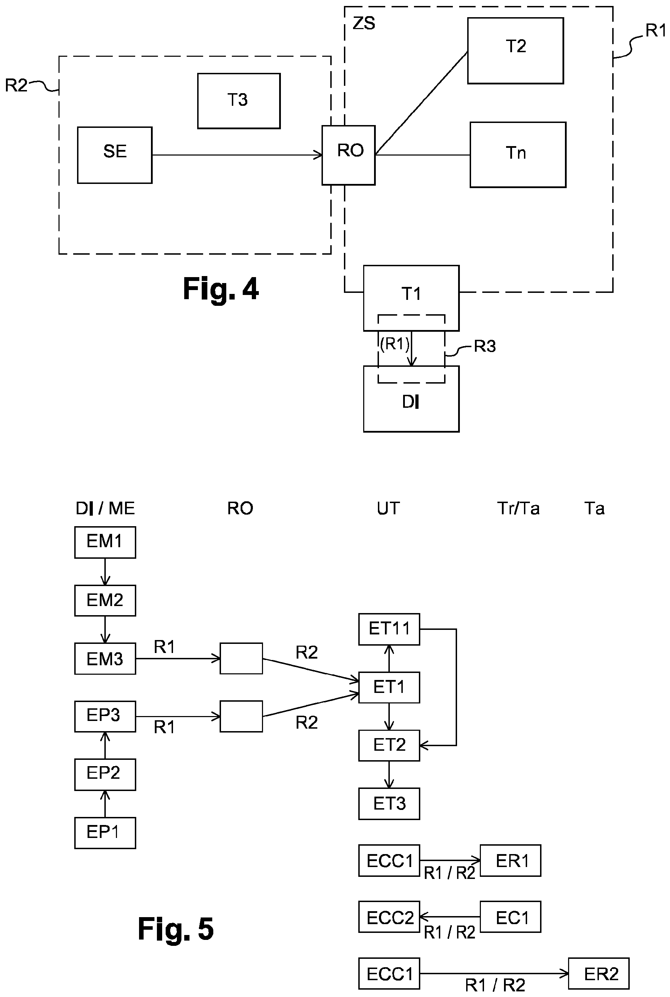

Comme illustré à la figure 4, le dispositif de surveillance DI établit le réseau de communication local R3. Dans le mode de réalisation présenté le module d'écoute ME est compris dans le dispositif de surveillance DI.

Une quatrième étape E4 consiste en la réception par le dispositif de surveillance DI et/ou le module d'écoute ME d'une référence d'accès RF au réseau de communication R1.

Cette étape E4 est précédée par une étape E04 consistant à scanner un motif tel qu'un code-barres avec le terminal T1, le motif correspondant à une identification du dispositif de surveillance DI et/ou du module d'écoute ME.

L'identification du dispositif de surveillance DI et/ou du module d'écoute ME par le terminal T1 doté d'une caméra permet le transfert de cette identification vers le routeur RO et/ou l'unité de traitement UT qui autorise la connexion en envoyant la référence d'accès RF au dispositif de surveillance DI et/ou module d'écoute ME dans le réseau de communication R1.

Une étape E5 suivant l'étape de réception E4 consiste en la connexion du dispositif de surveillance DI au réseau de communication R1 grâce à la référence d'accès RF.

Ce procédé de référencement permet donc de définir quels sont les terminaux « surveillés » et les terminaux « surveillants » et également de permettre aisément la connexion du dispositif de surveillance DI et/ou du module d'écoute ME au réseau de communication R1.

Bien entendu après l'exécution de ce procédé de référencement, il est possible de modifier les autorisations des terminaux T1, T2, T3, Tn référencés à partir d'un terminal administrateur Ta.

### Procédé de contrôle de présence

Comme illustré à la figure 5, un procédé de contrôle de présence dans une zone de surveillance ZS est exécuté par un système de surveillance SY pour déterminer un risque d'intrusion d'une personne malintentionnée dans la zone de surveillance ZS.

Le procédé de contrôle de présence comprend une étape EM1 de détection d'une absence de mouvement ou d'au moins un mouvement dans une zone de détection ZD de la zone de surveillance ZS. Cette étape EM1 est réalisée par le dispositif de surveillance DI à l'aide de son détecteur de mouvement CA.

Le procédé de contrôle de présence comprend ensuite une étape EM2 de création et/ou de modification d'une information de mouvement IM en mémoire du dispositif de surveillance DI, cette information étant horodatée par le dispositif de surveillance DI. L'information de mouvement IM fait état d'absence de mouvement ou d'un ou plusieurs mouvements d'entités E1, E2, E3, En détectés.

Une étape EP1 consiste en une détection d'une absence ou d'une présence d'au moins un terminal T1, T2, Tn dans le réseau de communication R1 comme illustré à la figure 1.

Cette détection est réalisée par le biais du routeur RO et consiste en une recherche des terminaux T1, T2, Tn dans au moins un paquet de données échangé à l'intérieur du réseau de communication R1. Le routeur RO fournit un paquet de données échangé à l'intérieur du réseau de communication R1 au module d'écoute ME.

Le réseau de communication R1 est le réseau engendré par le routeur RO et il est étendu dans la zone de surveillance ZS. Il s'agit par exemple d'un réseau WiFi , notamment un réseau local et sécurisé.

Une étape EP2 consiste ensuite en la création et/ou la modification d'une information de présence IP en mémoire du module d'écoute ME, l'information de présence IP étant relative à l'absence ou la présence d'au moins un terminal T1, T2, Tn dans le réseau de communication R1.

L'information de présence IP est horodatée par le module d'écoute ME et peut en outre comprendre une indication relative à la sollicitation d'un terminal détecté, par exemple T1.

Il s'agit par exemple d'un indicateur d'activité ou d'inactivité du terminal T1 sur le réseau de communication R1, relatif au fait que le terminal T1 a été utilisé il y a peu et/ou d'un indicateur de déplacement provenant d'une mesure du terminal T1 attestant du déplacement du terminal T1 (par exemple une information provenant d'un système de localisation (GPS) du terminal T1).

La similitude entre les étapes EM1, EM2 d'une part et EP1, EP2 d'autre part apparait alors : la présence d'une entité E1, E2, En est détectée et la présence d'un terminal T1, T2, T3 également.

Le procédé de contrôle de présence comprend une étape EM3 consistant en l'envoi de l'information de mouvement IM par le dispositif de surveillance DI à destination de l'unité de traitement UT.

Dans le mode de réalisation présenté, la transmission de l'information de mouvement IM est effectuée via le routeur RO. Cependant d'autres liaisons de communication peuvent être mises en place de manière alternative.

Une étape EP3 consiste en l'envoi de l'information de présence IP par le module d'écoute ME, c'est-à-dire dans le mode de réalisation présenté par le dispositif de surveillance DI, à destination de l'unité de traitement UT.

Tout comme pour l'information de mouvement IM, dans le mode de réalisation présenté, la transmission de l'information de présence IP est effectuée via le routeur RO. Cependant d'autres liaisons de communication peuvent être mises en place de manière alternative.

Le détecteur de mouvement CA est en fonctionnement quasi-permanent (autrement dit, des périodes de veille du détecteur de mouvement peuvent alterner avec des périodes dans lesquelles il est actif, mais un mouvement est détecté de manière instantanée à l'échelle humaine), c'est-à-dire que les étapes EM1 et EM2 sont réalisées de manière quasi-continue. Selon l'enchainement des étapes du procédé de contrôle de présence détaillées ci-avant, plusieurs modes de fonctionnement sont à distinguer.

L'étape de détection EP1 est réalisée après qu'une entité E2, ait été détectée lors de l'étape EM1 dans un mode de fonctionnement dit « alarme activée ».

L'étape EP3 d'envoi de l'information de présence IP est en mode « alarme activée » réalisée suite à l'étape EP2 de création et/ou de modification de l'information de présence IP, l'étape d'envoi EM3 étant réalisée en même temps que l'étape EP3.

Dans le mode de fonctionnement « alarme activée », il apparait donc que la détection de mouvement est permanente et que la détection de présence est réalisée chaque fois qu'un mouvement est détecté, les informations de mouvements IM et les informations de présences IP étant ensuite transférées à l'unité de traitement UT.

Ce mode de fonctionnement est le plus rapide pour faire remonter les informations de présences IP et les informations de mouvements IM vers l'unité de traitement UT.

De manière alternative, cette étape EP3 d'envoi peut être subordonnée à la réception par le module d'écoute ME d'une requête correspondante émise par l'unité de traitement UT. L'étape EP3 peut également être effectuée selon une base de temps définie.

Le choix de ce réglage dépend de la nécessité de disposer d'une information de présence IP récente pour l'unité de traitement UT et dépend également de la limitation de la consommation énergétique de la batterie BA du dispositif de surveillance DI.

Selon un mode de fonctionnement dit « alarme désactivée », l'étape d'envoi EP3 est réalisée selon une base de temps définie, le but étant de limiter la consommation énergétique du dispositif de surveillance DI. Dans ce cas, l'étape d'envoi EM3 est réalisée en même temps que l'étape d'envoi EP3. Ce mode de fonctionnement ne fait pas partie de l'invention.

Il apparait donc selon ce mode de réalisation que le dispositif de surveillance DI recueille un ensemble d'informations de mouvements IM et un ensemble d'informations de présences IP mais envoie ces informations selon la base de temps définie.

L'étape de détection EP1 peut également être réalisée de manière répétée selon une fréquence déterminée pour une consommation énergétique réduite en mode de fonctionnement « alarme désactivée ».

Une étape ET1 consiste ensuite en la réception de l'information de présence IP et/ou de l'information de mouvement IM par l'unité de traitement, via le routeur RO dans le mode de réalisation présenté.

Une étape ET11 d'enregistrement en mémoire de l'unité de traitement UT des informations IP et/ou IM reçues peut être réalisée ensuite. Cette disposition permet de réaliser un historique des informations de présence IP et/ou des informations de mouvements IM car celles-ci sont horodatées.

Une étape ET2 d'application d'une fonction d'association à l'information de présence IP et/ou l'information de mouvement IM est ensuite réalisée par l'unité de traitement UT.

L'application de la fonction d'association a pour but d'engendrer une information de correspondance IC relative à la correspondance ou à la non-correspondance entre un profil utilisateur préalablement référencé en lien avec un terminal T2 et un terminal T2 dont la présence est détectée.

Ainsi la fonction d'association permet de déterminer qu'un mouvement détecté soit correspond soit ne correspond pas à la présence d'un terminal T2 référencé au préalable. Il est donc possible de détecter tout mouvement ne correspondant pas à un mouvement d'un utilisateur ayant avec lui son terminal référencé.

Une étape ET3 consiste ensuite en l'analyse de l'information de correspondance IC par l'unité de traitement UT dans le but d'obtenir un résultat relatif à une potentielle intrusion dans la zone de surveillance ZS.

L'analyse est réalisée selon un critère de détermination d'irrégularité, ceci ayant pour but de déclencher une alarme et/ou d'avertir un terminal récepteur Tr de l'irrégularité.

Le critère de détermination d'irrégularité peut correspondre à un mouvement détecté non lié à un profil utilisateur, c'est-à-dire une potentielle intrusion.

Il peut également s'agir de la détection d'un terminal connu sans mouvement correspondant pendant une durée déterminée. Dans ce cas l'irrégularité peut correspondre à un malaise de l'utilisateur du terminal en question ou une impossibilité de la quitter la zone de surveillance ZS.

L'étape ET2 d'application de la fonction d'association et l'étape ET3 d'analyse de l'information de correspondance IC peuvent être réalisées à plusieurs reprises, les informations de mouvements IM et/ou les informations de présences IP préalablement enregistrées en mémoire de l'unité de traitement UT lors de l'étape ET11 étant alors prises en compte.

Il apparait donc que l'unité de traitement UT permet de rassembler les informations de présences IP et les informations de mouvements IM au niveau de l'unité de traitement UT pour déterminer toute intrusion potentielle ou irrégularité à l'intérieur de la zone de surveillance ZS.

L'étape ECC1 consiste en l'envoi d'une information de retour IR par l'unité de traitement UT à destination d'un terminal récepteur Tr ou administrateur Ta. Cet envoi peut être réalisé via le routeur RO lorsque le terminal récepteur Tr ou administrateur Ta est connecté au réseau de communication R1 ou via le réseau de communication externe R2 lorsque le terminal récepteur Tr ou administrateur Ta est hors de la zone de surveillance ZS.

L'information de retour IR comprend une indication relative à l'information de mouvement IM et/ou l'information de présence IP et/ou un résultat de l'analyse de l'information de correspondance IC.

Le terminal Tr réalise donc une étape de réception ER1, ER2 de cette information de retour IR comme illustré à la figure 5.

De manière similaire, un terminal administrateur Ta est apte à engendrer une information de commande et/ou de contrôle ICC et de l'envoyer à l'unité de traitement UT lors d'une étape EC1.

Une étape ECC2 de réception de l'information de commande et/ou de contrôle est ensuite réalisée par l'unité de traitement UT soit via le routeur RO lorsque le terminal administrateur Ta est connecté au réseau de communication R1 soit via le réseau de communication externe R2.

L'information de commande et/ou de contrôle ICC peut comprendre :
- une requête relative à l'exécution d'une étape de détection EM1 d'une absence de mouvement ou d'au moins un mouvement d'au moins une entité E1, E2, En et/ou d'une étape de détection EP1 d'une absence et/ou d'une présence d'au moins un terminal T1, T2, T3, Tn dans un réseau de communication R1, et/ou,
- une requête relative à l'exécution d'une étape l'application ET2 de la fonction d'association et/ou à l'exécution d'une étape d'analyse ET3 de l'information de correspondance IC, et/ou,
- une requête relative à l'exécution d'une étape d'envoi ECC1 par l'unité de traitement UT d'une information de retour IR.

Il apparait donc que l'unité de traitement UT du système de surveillance SY centralise les informations de présence IP et les informations de mouvement IM pour en déduire des irrégularités et en avertir les récepteurs et/ou administrateurs.

Comme il va de soi, l'invention ne se limite pas à la seule forme d'exécution décrite ci-dessus à titre d'exemple, elle en embrasse au contraire toutes les variantes de réalisation comprises dans l'objet des revendications attenantes.

## Revendications

1. Procédé de contrôle de présence dans une zone de surveillance (ZS) par un système de surveillance (SY) comprenant les étapes suivantes :
- (EM1) détection d'une absence de mouvement ou d'au moins un mouvement d'au moins une entité (E1, E2, En) dans une zone de détection (ZD) de la zone de surveillance (SZ) par un dispositif de surveillance (DI) du système de surveillance (SY),
- (EM2) création et/ou modification en mémoire du dispositif de surveillance (DI) d'une information de mouvement (IM) relative à l'absence de mouvement ou à l'au moins un mouvement d'au moins une entité (E1, E2, En) détectée au cours de l'étape de détection (EM1) d'absence de mouvement ou de l'au moins un mouvement,
- (EM3) envoi de l'information de mouvement (IM) par le dispositif de surveillance (DI) à destination d'une unité de traitement (UT) du système de surveillance (SY), l'unité de traitement (UT) étant agencée pour émettre une requête à destination d'un module d'écoute (ME) du système de surveillance (SY) sur réception d'une information de mouvement (IM), ladite requête correspondant à une demande d'obtention d'une information de présence (IP),
- (EP1) détection par le module d'écoute (ME) du système de surveillance (SY) d'une absence ou d'une présence d'au moins un terminal (T1, T2, T3, Tn) dans un réseau de communication (R1), le module d'écoute (ME) étant agencé pour communiquer avec un routeur (RO) du système de surveillance (SY) et étant pourvu d'un analyseur de paquets configuré pour détecter dans au moins un paquet de données échangé dans le réseau de communication (R1) et reçu du routeur (RO) ladite absence ou présence d'au moins un terminal (T1, T2, T3, Tn) dans le réseau de communication (R1), le réseau de communication (R1) étant étendu dans la zone de surveillance (ZS),
- (EP2) création et/ou modification en mémoire du module d'écoute (ME) d'une information de présence (IP), l'information de présence (IP) étant relative à l'absence ou la présence d'au moins un terminal (T1, T2, T3, Tn) dans la zone de surveillance (ZS) détectée au cours de l'étape (EP1) de détection d'absence ou de présence d'au moins un terminal (T1, T2, T3, Tn),
- (EP3) envoi de l'information de présence (IP) par le module d'écoute (ME) à destination de l'unité de traitement (UT),
l'étape (EM1) de détection d'au moins un mouvement d'au moins une entité (E1, E2, En) est suivie par l'étape (EP1) de détection de l'absence et/ou de la présence d'au moins un terminal (T1, T2, T3, Tn) dans le réseau de communication (R1), l'étape de détection étant réalisée après qu'une entité ait été détectée dans l'étape de détection d'au moins un mouvement, une intrusion étant détectée par le système de surveillance (SY) lorsqu'il n'y a pas de correspondance entre une détection de mouvement et une détection de terminal (T1, T2, T3, Tn).

2. Procédé de contrôle de présence selon la revendication 1, comprenant en outre les étapes suivantes réalisées par l'unité de traitement (UT) :
- (ET1) réception de l'information de présence (IP) et de l'information de mouvement (IM),
- (ET2) application d'une fonction d'association à l'information de présence (IP) et à l'information de mouvement (IM), l'application de la fonction d'association engendrant une information de correspondance (IC),
- (ET3) analyse de l'information de correspondance (IC) selon au moins un critère de détermination d'irrégularité.

3. Procédé de contrôle de présence selon la revendication 2, dans lequel la fonction d'association consiste à établir qu'un mouvement détecté soit correspond soit ne correspond pas à la présence d'un terminal déterminé détecté dans le réseau de communication.

4. Procédé de contrôle de présence selon l'une des revendications 2 ou 3, comprenant en outre une étape (ET11) d'enregistrement de l'information de présence (IP) et/ou de l'information de mouvement (IM) en mémoire de l'unité de traitement (UT).

5. Procédé de contrôle de présence selon l'une des revendications 1 à 4, dans lequel l'information de mouvement (IM) est horodatée par le dispositif de surveillance (DI) et/ou dans lequel l'information de présence (IP) est horodatée par le module d'écoute (ME).

6. Procédé de contrôle de présence selon l'une des revendications 1 à 5, dans lequel l'étape (EP1) de détection de l'absence et/ou de la présence d'au moins un terminal (T1, T2, Tn) dans le réseau de communication (R1) est réalisée de manière répétée selon une fréquence déterminée.

7. Procédé de contrôle de présence selon l'une des revendications 1 à 6 dans lequel l'étape d'envoi (EP3) de l'information de présence (IP) est réalisée suite à l'étape (EP2) de création et/ou modification en mémoire du dispositif de surveillance (DI) d'une information de présence (IP) ou sur requête de l'unité de traitement (UT) ou selon une base de temps définie.

8. Procédé de contrôle de présence selon l'une des revendications 1 à 7, comprenant en outre une étape (ECC1) d'envoi d'une information de retour (IR) par l'unité de traitement (UT) à destination d'un terminal récepteur (Tr) correspondant à un profil utilisateur référencé en tant que récepteur dans la mémoire de l'unité de traitement (UT), l'information de retour (IR) comprenant une indication relative à l'information de mouvement (IM) et/ou à l'information de présence (IP) et/ou à un résultat de l'analyse de l'information de correspondance (IC) selon l'au moins critère de détermination d'irrégularité.

9. Procédé de contrôle de présence selon la revendication 8, comprenant en outre une étape (ECC2) de réception d'une information de commande et/ou de contrôle (ICC) par l'unité de traitement (UT) en provenance d'un terminal administrateur (Ta) correspondant à un profil utilisateur étant référencé en tant qu'administrateur dans la mémoire de l'unité de traitement (UT), l'information de commande et/ou de contrôle comprenant :
- une requête relative à l'exécution d'une étape de détection (EM1) d'une absence de mouvement ou d'au moins un mouvement d'au moins une entité (E1, E2, En) et/ou d'une étape de détection (EP1) d'une absence et/ou d'une présence d'au moins un terminal (T1, T2, T3, Tn) dans un réseau de communication (R1), et/ou,
- une requête relative à l'exécution d'une étape l'application (ET2) de la fonction d'association et/ou à l'exécution d'une étape d'analyse (ET3) de l'information de correspondance (IC), et/ou,
- une requête relative à l'exécution d'une étape d'envoi (ECC1) par l'unité de traitement (UT) d'une information de retour (IR).

10. Procédé de contrôle de présence selon la revendication 8 ou 9, dans lequel l'information de retour (IR) et/ou l'information de commande et/ou de contrôle (ICC) transite via le routeur (RO).

11. Procédé de contrôle de présence selon l'une des revendications 1 à 10, dans lequel est réalisé un référencement préalable d'un compte familial en mémoire d'une unité de traitement (UT) du système de surveillance (SY) comprenant les étapes suivantes :
- (E1) création et/ou modification d'un compte familial comprenant au moins un profil utilisateur en mémoire de l'unité de traitement (UT),
- (E2) affectation à l'au moins un compte utilisateur d'un référencement en tant qu'administrateur et/ou récepteur par l'unité de traitement (UT), un administrateur étant apte à envoyer une information de commande et/ou de contrôle (ICC) à destination de l'unité de traitement (UT), un récepteur étant apte à recevoir une information de retour (IR) en provenance de l'unité de traitement (UT),
- (E3) établissement d'un réseau de communication local (R3) par un dispositif de surveillance (DI) et/ou un module d'écoute (ME) du système de surveillance (SY),
- (E4) réception via le réseau de communication local (R3) par le dispositif de surveillance (DI) et/ou le module d'écoute (ME) d'une référence d'accès (RF) à un réseau de communication (R1) du système de surveillance (SY) étendu dans une zone de surveillance (ZS) au dispositif de surveillance (DI) et/ou au module d'écoute (ME),
- (E5) connexion du dispositif de surveillance (DI) et/ou du module d'écoute (ME) au réseau de communication (R1) étendu en utilisant la référence d'accès.

12. Procédé de contrôle de présence selon la revendication 11, dans lequel l'étape (E4) de réception d'une référence d'accès (RF) est précédée par une étape (E04) consistant à scanner un motif tel qu'un code-barres avec un terminal (T1, T2, T3, Tn) comprenant un module de communication apte à se connecter audit réseau de communication local (R3), le motif correspondant à une identification du dispositif de surveillance et/ou du module d'écoute.

13. Système de surveillance agencé pour mettre en œuvre le procédé de contrôle de présence selon l'une des revendications 1 à 12 comprenant :
- un dispositif de surveillance (DI) apte à échanger des informations selon un protocole de communication sur le réseau de communication (R1),
le dispositif de surveillance (DI) comprenant un module de communication (MCDI) agencé pour échanger des informations selon le protocole de communication et un détecteur de mouvement (CA) pourvu d'un capteur, le détecteur de mouvement étant configuré pour déterminer une information de mouvement (IM) relative à la détection d'un mouvement d'une entité (E1, E2, En) dans une zone de détection (ZD) dudit capteur,
- un module d'écoute (ME) agencé pour communiquer avec un routeur (RO) et pourvu d'un analyseur de paquets configuré pour extraire d'au moins un paquet de données échangé dans le réseau de communication (R1) et reçu du routeur (RO) une information de présence (IP) relative à ou une absence ou une présence d'au moins un terminal (T1, T2, T3, Tn) dans le réseau de communication (R1),
- une unité de traitement (UT) comprenant un processeur agencé pour recevoir l'information de présence (IP) en provenance du module d'écoute (ME) et l'information de mouvement (IM) en provenance du dispositif de surveillance (DI).

## Patentansprüche

1. Verfahren zur Anwesenheitskontrolle in einem Überwachungsbereich (ZS) durch ein Überwachungssystem (SY), das die folgenden Schritte umfasst:
- (EM1) Erkennen eines Fehlens einer Bewegung oder mindestens einer Bewegung mindestens einer Entität (E1, E2, En) in einem Erkennungsbereich (ZD) des Überwachungsbereichs (SZ) durch eine Überwachungsvorrichtung (DI) des Überwachungssystems (SY),
- (EM2) Erstellen und/oder Ändern einer Bewegungsinformation (IM) im Speicher der Überwachungsvorrichtung (DI) bezüglich des Fehlen einer Bewegung oder der mindestens einen Bewegung mindestens einer Entität (E1, E2, En), die während des Schritts (EM1) des Erkennens des Fehlens einer Bewegung oder der mindestens einen Bewegung erkannt wurde,
- (EM3) Senden der Bewegungsinformation (IM) durch die Überwachungsvorrichtung (DI) an eine Verarbeitungseinheit (UT) des Überwachungssystems (SY), wobei die Verarbeitungseinheit (UT) so angeordnet ist, dass sie eine Anfrage an ein Abhörmodul (ME) des Überwachungssystems (SY) sendet, wenn sie eine Bewegungsinformation (IM) empfängt, wobei die Anfrage einer Anforderung zum Erhalten einer Anwesenheitsinformation (IP) entspricht,
- (EP1) Erkennen eines Fehlens oder eines Vorhandenseins mindestens eines Endgeräts (T1, T2, T3, Tn) in einem Kommunikationsnetzwerk (R1) durch das Abhörmodul (ME) des Überwachungssystems (SY), wobei das Abhörmodul (ME) so angeordnet ist, dass es mit einem Router (RO) des Überwachungssystems (SY) kommuniziert, und mit einem Paketanalysator ausgestattet ist, der so konfiguriert ist, dass er in mindestens einem Datenpaket, das im Kommunikationsnetzwerk (R1) ausgetauscht und vom Router (RO) empfangen wird, das Fehlen oder das Vorhandensein mindestens eines Endgeräts (T1, T2, T3, Tn) im Kommunikationsnetzwerk (R1) erkennt, wobei das Kommunikationsnetzwerk (R1) im Überwachungsbereich (ZS) ausgedehnt ist,
- (EP2) Erstellen und/oder Ändern einer Anwesenheitsinformation (IP) im Speicher des Abhörmoduls (ME), wobei die Anwesenheitsinformation (IP) sich auf das Fehlen oder das Vorhandensein mindestens eines Endgeräts (T1, T2, T3, Tn) im Überwachungsbereich (ZS) bezieht, die während des Schritts (EP1) des Erkennens des Fehlens oder der Anwesenheit mindestens eines Endgeräts (T1, T2, T3, Tn) erkannt wurde,
- (EP3) Senden der Anwesenheitsinformation (IP) durch das Abhörmodul (ME) an die Verarbeitungseinheit (UT),
wobei auf den Schritt (EM1) des Erkennens mindestens einer Bewegung mindestens einer Entität (E1, E2, En) der Schritt (EP1) des Erkennens des Fehlens und/oder des Vorhandenseins mindestens eines Endgeräts (T1, T2, T3, Tn) im Kommunikationsnetzwerk (R1) folgt, wobei der Schritt des Erkennens durchgeführt wird, nachdem eine Entität im Schritt des Erkennens mindestens einer Bewegung erkannt wurde, wobei ein Eindringen durch das Überwachungssystem (SY) erkannt wird, wenn es keine Übereinstimmung zwischen einem Erkennen einer Bewegung und einem Erkennen eines Endgeräts (T1, T2, T3, Tn) gibt.

2. Verfahren zur Anwesenheitskontrolle nach Anspruch 1, ferner umfassend die folgenden von der Verarbeitungseinheit (UT) durchgeführten Schritte:
- (ET1) Empfangen der Anwesenheitsinformation (IP) und der Bewegungsinformation (IM),
- (ET2) Anwenden einer Assoziationsfunktion auf die Präsenzinformation (IP) und die Bewegungsinformation (IM), wobei das Anwenden der Assoziationsfunktion eine Übereinstimmungsinformation (IC) erzeugt,
- (ET3) Analysieren der Übereinstimmungsinformation (IC) gemäß mindestens einem Kriterium zum Bestimmen von Unregelmäßigkeiten.

3. Verfahren zur Anwesenheitskontrolle nach Anspruch 2, wobei die Assoziationsfunktion darin besteht, festzustellen, ob eine erkannte Bewegung entweder dem Vorhandensein eines bestimmten, im Kommunikationsnetzwerk erkannten Endgeräts entspricht oder nicht.

4. Verfahren zur Anwesenheitskontrolle nach einem der Ansprüche 2 oder 3, ferner umfassend einen Schritt (ET11) des Speicherns der Anwesenheitsinformation (IP) und/oder der Bewegungsinformation (IM) im Speicher der Verarbeitungseinheit (UT).

5. Verfahren zur Anwesenheitskontrolle nach einem der Ansprüche 1 bis 4, wobei die Bewegungsinformation (IM) durch die Überwachungsvorrichtung (DI) mit einem Zeitstempel versehen wird und/oder wobei die Anwesenheitsinformation (IP) durch das Abhörmodul (ME) mit einem Zeitstempel versehen wird.

6. Verfahren zur Anwesenheitskontrolle nach einem der Ansprüche 1 bis 5, wobei der Schritt (EP1) des Erkennens des Fehlens und/oder des Vorhandenseins mindestens eines Endgeräts (T1, T2, Tn) im Kommunikationsnetzwerk (R1) wiederholt mit einer bestimmten Frequenz durchgeführt wird.

7. Verfahren zur Anwesenheitskontrolle nach einem der Ansprüche 1 bis 6, wobei der Schritt des Sendens (EP3) der Anwesenheitsinformation (IP) nach dem Schritt (EP2) des Erstellens und/oder Änderns einer Anwesenheitsinformation (IP) im Speicher der Überwachungsvorrichtung (DI) oder auf Anfrage der Verarbeitungseinheit (UT) oder gemäß einer definierten Zeitbasis durchgeführt wird.

8. Verfahren zur Anwesenheitskontrolle nach einem der Ansprüche 1 bis 7, ferner umfassend einen Schritt (ECC1) des Sendens einer Rückkopplungsinformation (IR) durch die Verarbeitungseinheit (UT) an ein Empfangsendgerät (Tr), das einem Benutzerprofil entspricht, das im Speicher der Verarbeitungseinheit (UT) als Empfänger referenziert ist, wobei die Rückkopplungsinformation (IR) eine Angabe bezüglich der Bewegungsinformation (IM) und/oder der Anwesenheitsinformation (IP) und/oder eines Ergebnisses der Analyse der Übereinstimmungsinformation (KI) gemäß dem mindestens einen Kriterium zum Bestimmen von Unregelmäßigkeiten umfasst.

9. Verfahren zur Anwesenheitskontrolle nach Anspruch 8, ferner umfassend einen Schritt (ECC2) des Empfangens einer Steuer- und/oder Kontrollinformation (ICC) durch die Verarbeitungseinheit (UT) von einem Administratorendgerät (Ta), das einem Benutzerprofil entspricht, das im Speicher der Verarbeitungseinheit (UT) als Administrator referenziert ist, wobei die Steuer- und/oder Kontrollinformation Folgendes umfasst:
- eine Anfrage bezüglich der Ausführung eines Schritts (EM1) des Erkennens eines Fehlens einer Bewegung oder mindestens einer Bewegung mindestens einer Entität (E1, E2, En) und/oder eines Schritts (EP1) des Erkennens eines Fehlens und/oder eines Vorhandenseins mindestens eines Endgeräts (T1, T2, T3, Tn) in einem Kommunikationsnetzwerk (R1), und/oder
- eine Anfrage bezüglich der Ausführung eines Schritts des Anwendens (ET2) der Assoziationsfunktion und/oder der Ausführung eines Schritts des Analysierens (ET3) der Übereinstimmungsinformation (IC), und/oder
- eine Anfrage bezüglich der Ausführung eines Schritts des Sendens (ECC1) einer Rückkopplungsinformation (IR) durch die Verarbeitungseinheit (UT).

10. Verfahren zur Anwesenheitskontrolle nach Anspruch 8 oder 9, wobei die Rückkopplungsinformation (IR) und/oder die Steuer- und/oder Kontrollinformation (ICC) über den Router (RO) geleitet wird.

11. Verfahren zur Anwesenheitskontrolle nach einem der Ansprüche 1 bis 10, wobei eine vorherige Referenzierung eines Familienkontos im Speicher einer Verarbeitungseinheit (UT) des Überwachungssystems (SY) durchgeführt wird, umfassend die folgenden Schritte:
- (E1) Erstellen und/oder Ändern eines Familienkontos, das mindestens ein Benutzerprofil im Speicher der Verarbeitungseinheit (UT) umfasst,
- (E2) Zuweisen einer Referenzierung als Administrator und/oder Empfänger durch die Verarbeitungseinheit (UT) an das mindestens eine Benutzerkonto, wobei ein Administrator in der Lage ist, eine Steuer- und/oder Kontrollinformation (ICC) an die Verarbeitungseinheit (UT) zu senden, wobei ein Empfänger in der Lage ist, eine Rückkopplungsinformation (IR) von der Verarbeitungseinheit (UT) zu empfangen,
- (E3) Aufbauen eines lokalen Kommunikationsnetzwerks (R3) durch eine Überwachungsvorrichtung (DI) und/oder ein Abhörmodul (ME) des Überwachungssystems (SY),
- (E4) Empfangen, über das lokale Kommunikationsnetzwerk (R3) durch die Überwachungsvorrichtung (DI) und/oder das Abhörmodul (ME), einer Zugangsreferenz (RF) zu einem Kommunikationsnetzwerk (R1) des Überwachungssystems (SY), das in einem Überwachungsbereich (ZS) auf die Überwachungsvorrichtung (DI) und/oder das Abhörmodul (ME) ausgedehnt ist,
- (E5) Verbinden der Überwachungsvorrichtung (DI) und/oder des Abhörmoduls (ME) mit dem erweiterten Kommunikationsnetzwerk (R1) unter Verwendung der Zugangsreferenz.

12. Verfahren zur Anwesenheitskontrolle nach Anspruch 11, wobei dem Schritt (E4) des Empfangens einer Zugangsreferenz (RF) ein Schritt (E04) vorausgeht, der darin besteht, ein Muster wie einen Barcode mit einem Endgerät (T1, T2, T3, Tn) zu scannen, das ein Kommunikationsmodul umfasst, das in der Lage ist, sich mit dem lokalen Kommunikationsnetzwerk (R3) zu verbinden, wobei das Muster einer Identifizierung der Überwachungsvorrichtung und/oder des Abhörmoduls entspricht.

13. Überwachungssystem, das so angeordnet ist, dass es das Verfahren zur Anwesenheitskontrolle nach einem der Ansprüche 1 bis 12 durchführt und Folgendes umfasst:
- eine Überwachungsvorrichtung (DI), die in der Lage ist, Informationen gemäß einem Kommunikationsprotokoll über das Kommunikationsnetzwerk (R1) auszutauschen,
wobei die Überwachungsvorrichtung (DI) ein Kommunikationsmodul (MCDI), das so angeordnet ist, dass es Informationen gemäß dem Kommunikationsprotokoll austauscht, und einen mit einem Sensor versehenen Bewegungsmelder (CA) umfasst, wobei der Bewegungsmelder so konfiguriert ist, dass er eine Bewegungsinformation (IM) bezüglich des Erkennens einer Bewegung einer Entität (E1, E2, En) in einem Erkennungsbereich (ZD) des Sensors bestimmt,
- ein Abhörmodul (ME), das so angeordnet ist, dass es mit einem Router (RO) kommuniziert, und mit einem Paketanalysator ausgestattet ist, der so konfiguriert ist, dass er aus mindestens einem Datenpaket, das im Kommunikationsnetzwerk (R1) ausgetauscht und vom Router (RO) empfangen wurde, eine Anwesenheitsinformation (IP) bezüglich eines Fehlens oder eines Vorhandenseins von mindestens einem Endgerät (T1, T2, T3, Tn) im Kommunikationsnetzwerk (R1) extrahiert,
- eine Verarbeitungseinheit (UT), die einen Prozessor umfasst, der so angeordnet ist, dass er die Anwesenheitsinformation (IP) vom Abhörmodul (ME) und die Bewegungsinformation (IM) von der Überwachungsvorrichtung (DI) empfängt.

## Claims

1. A method for monitoring presence in a surveillance area (ZS) by a surveillance system (SY) comprising the following steps:
- (EM1) detection of an absence of motion or at least one motion of at least one entity (E1, E2, En) in a detection area (ZD) of the surveillance area (ZS) by a surveillance device (DI) of the surveillance system (SY),
- (EM2) creation and/or modification in the memory of the surveillance device (DI) of motion information (IM) relating to the absence of motion or at least one motion of at least one entity (E1, E2, En) detected during the step of detecting (EM1) the absence of motion or the at least one motion,
- (EM3) sending of the motion information (IM) by the surveillance device (DI) to a processing unit (UT) of the surveillance system (SY), the processing unit (UT) being arranged to emit a query to a listening module (ME) of the surveillance system (SY) upon receipt of motion information (IM), said query corresponding to a request to obtain presence information (IP),
- (EP1) detection by the listening module (ME) of the surveillance system (SY) of an absence or presence of at least one terminal (T1, T2, T3, Tn) in a communication network (R1), the listening module (ME) being arranged to communicate with a router (RO) of the surveillance system (SY) and being provided with a packet analyzer configured to detect in at least one data packet exchanged in the communication network (R1) and received from the router (RO) said absence or presence of at least one terminal (T1, T2, T3, Tn) in the communication network (R1), the communication network (R1) being extended in the surveillance area (ZS),
- (EP2) creation and/or modification in the memory of the listening module (ME) of presence information (IP), the presence information (IP) relating to the absence or presence of at least one terminal (T1, T2, T3, Tn) in the surveillance area (ZS) detected during the step (EP1) of detecting the absence or presence of at least one terminal (T1, T2, T3, Tn),
- (EP3) sending of the presence information (IP) by the listening module (ME) to the processing unit (UT),
the step (EM1) of detecting at least one motion of at least one entity (E1, E2, En) is followed by the step (EP1) of detecting the absence and/or presence of at least one terminal (T1, T2, T3, Tn) in the communication network (R1), the detection step being carried out after an entity has been detected in the step of detecting at least one motion, an intrusion being detected by the surveillance system (SY) when there is no correspondence between a motion detection and a terminal (T1, T2, T3, Tn) detection.

2. The presence monitoring method according to claim 1, further comprising the following steps carried out by the processing unit (UT):
- (ET1) reception of the presence information (IP) and the motion information (IM),
- (ET2) application of an association function to the presence information (IP) and the motion information (IM), the application of the association function generating a correspondence information (IC),
- (ET3) analysis of the correspondence information (IC) according to at least one irregularity determination criterion.

3. The presence monitoring method according to claim 2, wherein the association function consists in establishing that a detected motion either corresponds or does not correspond to the presence of a determined terminal detected in the communication network.

4. The presence monitoring method according to any of claims 2 or 3, further comprising a step (ET11) of recording the presence information (IP) and/or the motion information (IM) in the memory of the processing unit (UT).

5. The presence monitoring method according to any of claims 1 to 4, wherein the motion information (IM) is time-stamped by the surveillance device (D) and/or wherein the presence information (IP) is time-stamped by the listening module (ME).

6. The presence monitoring method according to any of claims 1 to 5, wherein the step (EP1) of detecting the absence and/or presence of at least one terminal (T1, T2, Tn) in the communication network (R1) is carried out repeatedly according to a determined frequency.

7. The presence monitoring method according to any of claims 1 to 6 wherein the step of sending (EP3) the presence information (IP) is carried out following the step (EP2) of creating and/or modifying in the memory of the surveillance device (DI) presence information (IP) or in response to a query of the processing unit (UT) or according to a defined time base.

8. The presence monitoring method according to any of claims 1 to 7, further comprising a step (ECC1) of sending return information (IR) by the processing unit (UT) to a receiving terminal (Tr) corresponding to a user profile referenced as a receiver in the memory of the processing unit (UT), the return information (IR) comprising an indication relating to the motion information (IM) and/or the presence information (IP) and/or a result of the analysis of the correspondence information (IC) according to the at least one irregularity determination criterion.

9. The presence monitoring method according to claim 8, further comprising a step (ECC2) of receiving control and/or monitoring information (ICC) by the processing unit (UT) from an administrator terminal (Ta) corresponding to a user profile being referenced as administrator in the memory of the processing unit (UT), the control and/or monitoring information comprising:
- a query relating to the execution of a step of detecting (EM1) an absence of motion or at least one motion of at least one entity (E1, E2, En) and/or a step of detecting (EP1) an absence and/or presence of at least one terminal (T1, T2, T3, Tn) in a communication network (R1), and/or,
- a query relating to the execution of a step of applying (ET2) the association function and/or the execution of a step of analyzing (ET3) the correspondence information (IC), and/or,
- a query relating to the execution of a step of sending (ECC1) by the processing unit (UT) return information (IR).

10. The presence monitoring method according to claim 8 or 9, wherein the return information (IR) and/or the control and/or monitoring information (ICC) passes via the router (RO).

11. The presence monitoring method according to any of claims 1 to 10, wherein a preliminary referencing of a family account is carried out in the memory of a processing unit (UT) of the surveillance system (SY), comprising the following steps:
- (E1) creation and/or modification of a family account comprising at least one user profile in the memory of the processing unit (UT),
- (E2) assignment, to the at least one user account, of a referencing as administrator and/or receiver by the processing unit (UT), an administrator being capable of sending control and/or monitoring information (ICC) to the processing unit (UT), a receiver being capable of receiving return information (IR) from the processing unit (UT),
- (E3) establishment of a local communication network (R3) by a surveillance device (DI) and/or a listening module (ME) of the surveillance system (SY),
- (E4) reception via the local communication network (R3) by the surveillance device (DI) and/or the listening module (ME) of an access reference (RF) to a communication network (R1) of the surveillance system (SY) extended in a surveillance area (ZS) to the surveillance device (DI) and/or the listening module (ME),
- (E5) connection of the surveillance device (DI) and/or the listening module (ME) to the extended communication network (R1) using the access reference.

12. The presence monitoring method according to claim 11, wherein the step (E4) of receiving an access reference (RF) is preceded by a step (E04) of scanning a pattern such as a barcode with a terminal (T1, T2, T3, Tn) comprising a communication module capable of connecting to said local communication network (R3), the pattern corresponding to an identification of the surveillance device and/or the listening module.

13. A surveillance system arranged to implement the presence monitoring method according to any of claims 1 to 12, comprising:
- a surveillance device (DI) capable of exchanging information according to a communication protocol on the communication network (R1),
the surveillance device (DI) comprising a communication module (MCDI) arranged to exchange information according to the communication protocol and a motion detector (CA) provided with a sensor, the motion detector being configured to determine motion information (IM) relating to the detection of motion of an entity (E1, E2, En) in a detection area (ZD) of said sensor,
- a listening module (ME) arranged to communicate with a router (RO) and provided with a packet analyzer configured to extract from at least one data packet exchanged in the communication network (R1) and received from the router (RO) presence information (IP) relating to either an absence or presence of at least one terminal (T1, T2, T3, Tn) in the communication network (R1),
- a processing unit (UT) comprising a processor arranged to receive presence information (IP) from the listening module (ME) and motion information (IM) from the surveillance device (DI).
